# EUROPEAN PATENT APPLICATION

(11) **EP 2 541 114 A1**
(43) Date of publication of application: **02.01.2013**
(21) Application number: 12171523.9
(22) Date of filing: 11.06.2012
(51) Int. Cl.: F16L 5/14, F16L 5/10

(54) **Split grommet assembly**

(30) Priority: 28.06.2011 GB 201110984
(71) Applicant: AIRBUS OPERATIONS LIMITED, Filton Bristol Bristol BS99 7AR (GB)
(72) Inventor: West, Colin John, Bristol, Bristol BS99 7AR (GB); Withers, Andrew, Bristol, Bristol BS99 7AR (GB); Sieng-You, Pemela, Bristol, Bristol BS99 7AR (GB)
(74) Representative: Butler, Daniel James

(57) **Abstract**

A split grommet assembly comprising a grommet (1) and a clamping ring (12). The grommet has a body portion (7) with a peripheral edge and a sealing groove (13) round the peripheral edge of the body portion. The grommet also has a gland portion (8) with a peripheral edge, and a hole (4) passing through the body and gland portions. The body and gland portions are each split along a split line which runs from the hole to their peripheral edges. The clamping ring encircles the peripheral edge of the gland portion and can be opened to permit an elongate object to be fitted into the hole via the split line, and closed to apply a compressive load to the peripheral edge of the gland portion which resists opening of the body along the split line.

## Description

### FIELD OF THE INVENTION

The present invention relates to a split grommet assembly, a kit of parts for assembling a split grommet assembly, an installation incorporating a split grommet assembly, and a method of assembling such an installation.

### BACKGROUND OF THE INVENTION

A known method of forming a seal between a cable and a wall involves the use of an elastomeric split grommet. The grommet is opened at a split line, allowing the cable to be inserted radially into the hole without having to draw the entire cable axially through the hole. Most split grommets cannot provide a robust vapour-proof or liquid-proof seal between one side of the wall and the other, since the vapour or liquid can leak through the split line.

US6364724 describes a grommet assembly for an outboard motor. The grommet is installed in a lower cowling, and a clamping plate (which forms part of the lower cowling) is tightened so as to compress the grommet and provide a substantially water-tight seal between the cable and the grommet.

### SUMMARY OF THE INVENTION

A first aspect of the invention provides a split grommet assembly comprising:
i. a grommet comprising a body portion with a peripheral edge, a sealing groove round the peripheral edge of the body portion, a gland portion with a peripheral edge, and a hole passing through the body and gland portions, wherein the body and gland portions are each made from an elastomeric material, and wherein the body and gland portions are each split along a split line which runs from the hole to their peripheral edges; and
ii. a clamping ring which encircles the peripheral edge of the gland portion and can be opened to permit an elongate object to be fitted into the hole via the split line, and closed to apply a compressive load to the peripheral edge of the gland portion which resists opening of the body along the split line.

A second aspect of the invention provides a kit of parts for assembling a split grommet assembly, the kit of parts comprising:
i. a grommet comprising a body portion with a peripheral edge, a sealing groove round the peripheral edge of the body portion, a gland portion with a peripheral edge, and a hole passing through the body and gland portions, wherein the body and gland portions are each made from an elastomeric material, and wherein the body and gland portions are each split along a split line which runs from the hole to their peripheral edges; and
ii. a clamping ring which can be fitted to encircle the peripheral edge of the gland portion, opened to permit an elongate object to be fitted into the hole via the split line, and closed to apply a compressive load to the peripheral edge of the gland portion which resists opening of the body along the split line.

A third aspect of the invention provides an installation comprising:
i. a grommet assembly comprising a grommet having a body portion with a peripheral edge, a sealing groove round the peripheral edge of the body portion, a gland portion with a peripheral edge, and a hole passing through the body and gland portions, wherein the body and gland portions are each split along a split line which runs from the hole to their peripheral edges; and wherein the grommet assembly further comprises a clamping ring which encircles the peripheral edge of the gland portion;
ii. a wall with an aperture, wherein the wall is seated in the sealing groove of the grommet and the gland portion protrudes from the aperture; and
iii. an elongate object passing through the hole in the grommet, the grommet providing a vapour-proof seal between the object and the wall substantially preventing vapour from passing through the aperture in the wall between the elongate object and the wall,
wherein the clamping ring applies a compressive load to the gland portion which resists opening of the grommet along the split line and causes the gland portion to apply a compressive load to the object, and wherein the clamping ring can be opened to permit the grommet to be opened along the split line and the elongate object removed from the grommet via the open split line.

A fourth aspect of the invention provides a method of assembling the installation of the third aspect, the method comprising:
i. passing the elongate object through the aperture;
ii. inserting the elongate object into the hole of the split grommet via the split line;
iii. fitting the body portion of the split grommet into the aperture; and
iv. applying the compressive load to the gland portion with the clamping ring after step ii. so the gland portion applies the compressive load to the object in the hole.

The steps of the method may be applied in the order presented above, or in another order. For example step ii may be performed before or after step i; step iii. may be performed before or after step ii.; and step iv may be performed before or after step iii.

Typically the compressive load applied by the clamping ring to the gland portion causes the body portion to deform and apply pressure to the wall. Preferably step iv is performed after the body portion has been fitted in step iii, and in doing so causes the body portion to deform and apply pressure to the wall.

The sealing groove typically comprises a base and a pair of side walls. The wall may only engage the base, or the side walls, but more preferably the base and the pair of side walls each engage the wall. Preferably at least one of the side walls is at least partially inclined inwardly towards the other side wall (at least before the grommet is installed). The inclined wall can then bend back during installation to form a secure seal with the wall.

Typically the body portion is fitted into the aperture by pushing it into the aperture, the body portion deforming as it is pushed into the aperture. For instance the body portion may comprise a first flange which defines a first one of the side walls, and a second flange which defines a second one of the side walls. During assembly the first or second flange is compressed as it is pushed through the aperture on one side and then expands as it exits the aperture on the other side.

Typically the gland portion comprises a flange running round its peripheral edge, and the clamping ring is positioned between the flange and the sealing groove. Optionally the gland portion comprises a clamp retention groove which runs round its peripheral edge, and the clamping ring is seated in the clamp retention groove. The flange and/or retention groove can prevent the clamping ring from falling off after installation.

Optionally the gland portion comprises a flange between the clamping ring and the sealing groove. This flange may then bulge radially when the clamping ring is tightened, enhancing the seal with the wall.

Typically the body portion and gland portion are made from an elastomeric material.

Typically the body portion and gland portion are integrally formed from a single piece of material, such as elastomeric material.

Preferably the clamping ring comprises a strap with first and second ends which can be separated from each other to permit an elongate object to be fitted into the hole via the split line and brought towards each other to close the clamp. The clamping ring typically further comprises a clamp tightening mechanism which can be operated to tighten the clamping ring and apply the compressive load to the body. For instance the tightening mechanism may comprise a pawl and ratchet (similar to a conventional cable-tie) or a threaded screw which is screwed into a block to tighten the clamp.

The hole in the grommet may have two or more split lines (in which case the grommet will be formed by a number of discrete segments which can be disassembled) but more preferably the hole in the grommet has only a single split line. Optionally the grommet may have two or more holes, each with a respective split line.

Typically fuel vapour is present on one side of the wall and the seal substantially prevents the fuel vapour from passing through the aperture in the wall between the elongate object and the wall.

### BRIEF DESCRIPTION OF THE DRAWINGS

Embodiments of the invention will now be described with reference to the accompanying drawings, in which:
Figure 1 is an end view of a grommet;
Figure 2 is a cross section taken along a line A-A in Figure 1;
Figure 3a is a cross section through an installation before the clamping ring is tightened;
Figure 3b is a cross section through an installation after the clamping ring has been tightened;
Figure 4 is an end view of a clamp;
Figure 5 is a side view of the clamp; and
Figure 6 shows the clamp in its opened state.

### DETAILED DESCRIPTION OF EMBODIMENT(S)

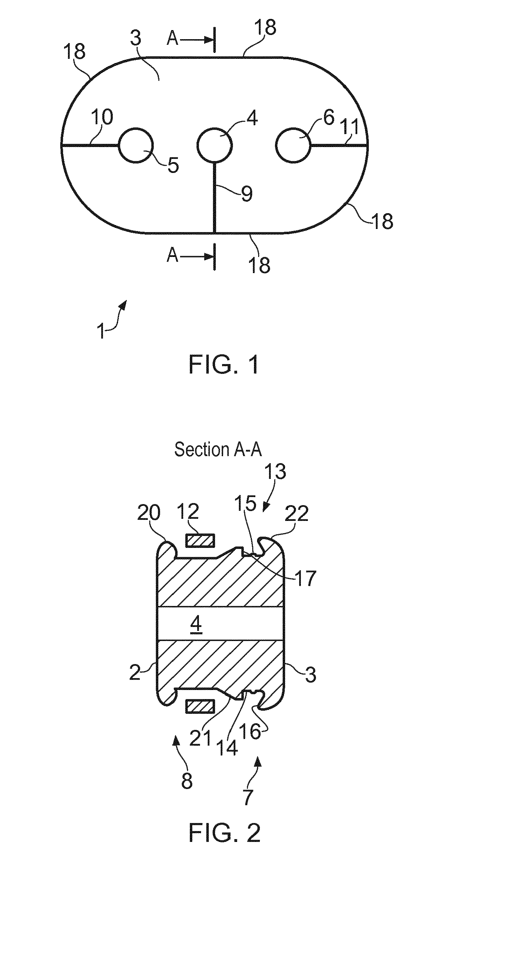

A split grommet assembly according to an embodiment of the invention is shown in Figures 1 and 2. The assembly consists of a grommet 1 and a clamping ring 12. The grommet has first and second end faces 2, 3 shown in Figure 2. Three holes 4-6 pass through the grommet between these first and second end faces. The grommet has an annular edge 18 between the end faces 2, 3 running round the periphery of the body, and three split lines 9-11 which each run from a respective hole 4-6 to the edge 18 along the full length of the hole so the grommet can be opened up at each split line.

The grommet 1 consists of a body portion 7 (on the right-hand side of Figure 2 adjacent to the end face 3) and a gland portion 8 (on the left-hand side of Figure 2 adjacent to the end face 2). The two portions 7, 8 of the grommet are integrally moulded together from a single piece of resilient material such as silicone, fluorosilicone, EPDM, nitrile, polychloroprene, or polyurethane. Alternatively the portions 7, 8 may be formed from a sponge of highly filled lightweight versions of the above.

An annular sealing groove 13 runs round the peripheral edge of the body portion 7 between a pair of annular flanges 21, 22. The sealing groove 13 has a base 14 with a small sealing ridge 15. The sealing groove 13 also has side walls 16, 17 defined by opposed faces of the annular flanges 21, 22. The inner side wall 17 is parallel with the end face 3 of the grommet and the outer side wall 16 is inclined inwardly towards the inner side wall 17.

The gland portion 8 has a flange 20 running round its peripheral edge adjacent to the end face 2. The flanges 20, 21 together define a clamp retention groove. The clamping ring 12 is seated within the clamp retention groove and encircles the edge of the gland portion. The flange 20 prevents the clamping ring 12 from slipping off the end of the grommet.

The clamping ring 12 is shown in Figure 2 encircling the grommet before it has been tightened to engage the grommet. As will be described in further detail below, the clamping ring can be opened to permit an elongate object to be fitted into the holes 4-6 via their respective split lines, and closed and tightened to apply a compressive load to the edge of the gland portion which resists opening of the grommet along the split lines 9-11.

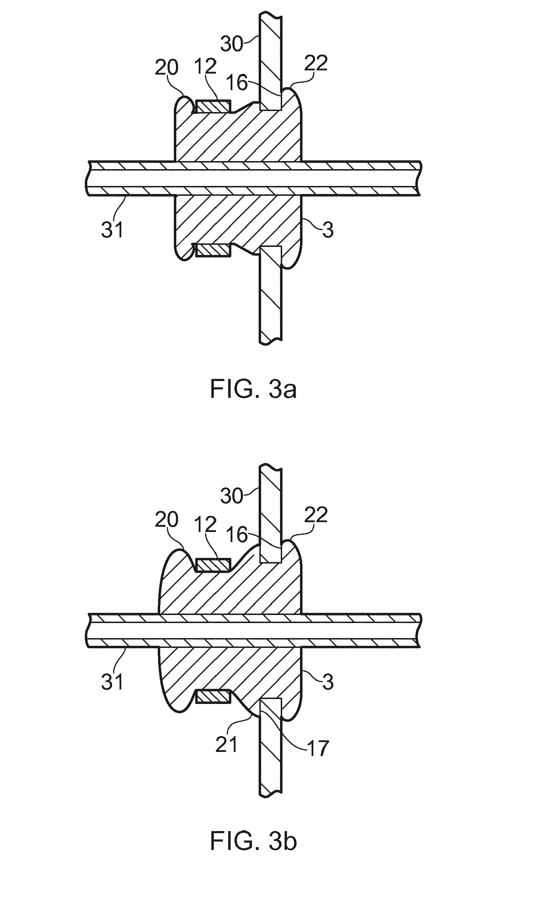

Figures 3a and 3b show an installation incorporating the grommet assembly of Figures 1 and 2. The body portion 7 of the grommet is pushed into an aperture in a wall 30. As the grommet is pushed into the aperture (from left to right as viewed in Figure 3) the flange 22 is bent back towards the base 14 and compressed to enable the flange 22 to pass through the aperture. Then as the flange 22 exits the aperture it expands and springs back to the position shown in Figure 3a where it engages the right-hand face of the wall 30. The wall 30 is seated in the sealing groove 13 and compresses the sealing ridge 15. The side walls 16, 17 of the sealing groove lie approximately parallel in their installed state as shown in Figure 3a.

An elongate object passes through each hole 4-6 in the grommet. Figure 3a shows an elongate object 31 in the hole 4. The object 31 may be for example an electrical cable, a pipe containing fuel or hydraulic fluid, or a pitot tube. Fuel vapour is present on one side of the wall and the grommet provides a vapour-proof seal between the object 31 and the wall 30, substantially preventing the fuel vapour from passing through the aperture in the wall between the elongate object and the wall. The gland portion 8 engages the object 31, substantially preventing radial movement of the portion of the object disposed within the grommet and providing a seal around the circumference of the object 31.

The clamping ring 12 is shown in Figure 3a before it is tightened, and in Figure 3b in its fully tightened state in which it engages and applies a compressive load to the grommet. The integrity of the seal is improved by this compressive load in three ways:
1. It resists opening of the grommet along the split lines 9-11, preventing vapour from leaking through them.
2. It causes the gland portion 8 to apply a compressive load to the object 31, which ensures the integrity of the seal between the object 31 and the grommet.
3. It causes the grommet to deform and apply pressure to the wall 30 which ensures the integrity of the seal between the grommet and the wall 30. Specifically, it causes the flange 21 between the clamping ring and the sealing groove to bulge radially (i.e. away from the object 31) and axially to the right so that the wall 17 applies increased pressure to the left-hand side of the wall 30.

The installation is assembled by the following steps:
1. The object 31 is threaded through the aperture in the wall 30.
2. Before or after step 1 the object 31 is inserted into the hole of the split grommet 1 via the open split line with the clamping ring 12 open.
3. After step 2 the body portion 7 of the split grommet is fitted into the aperture in the wall.
4. After step 3 the clamping ring 12 is fitted onto the grommet, closed and tightened.

The installation is disassembled by the following steps:
1. The clamping ring 12 is opened and removed.
2. After step 1 the body portion 7 of the split grommet is removed from the aperture in the wall.
3. After step 2 the object 31 is removed from the hole of the split grommet via the open split line.
4. The object 31 is pulled through the aperture in the wall.

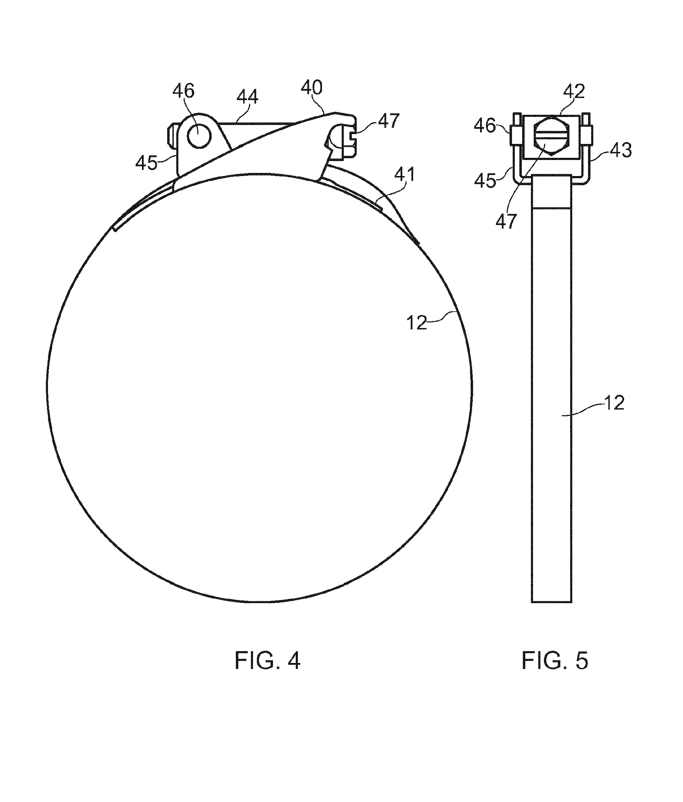

The clamping ring 12 is shown in detail in Figures 4-6. The clamping ring 12 and grommet 1 may be provided together as an assembly as shown in Figure 2, or they may be provided as an unassembled kit of parts.

The clamping ring comprises a strap 12 with first and second ends, one end carrying a pair of lugs 43, 45 and the other end carrying a housing 40. The end of the strap which carries the housing 40 forms a loop and is welded at 41.

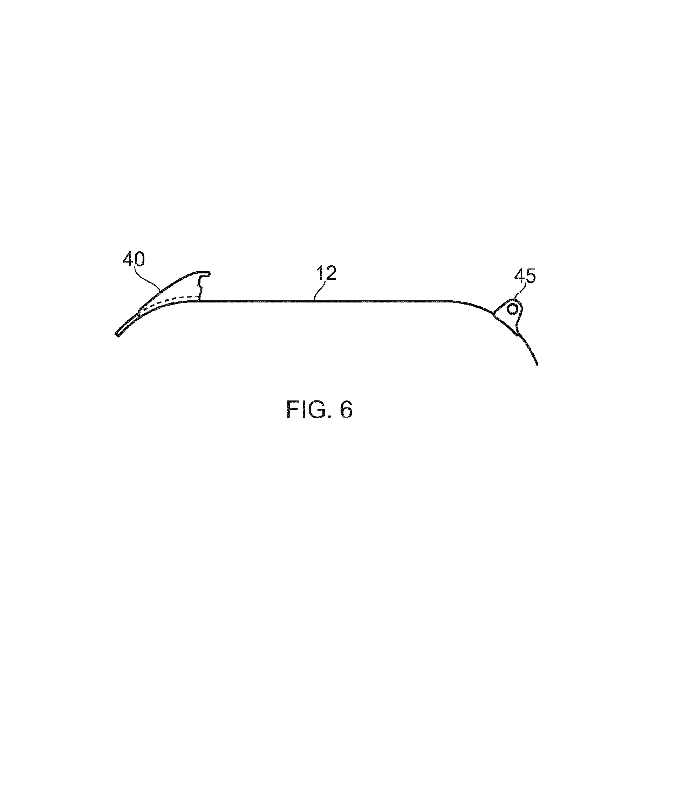

A block 42 is supported by the lugs 43, 45 on a pivot pin 46. A screw with a head 47 is retained in the housing 40. The screw has a threaded shaft 44 which can be screwed into the block 42 to progressively tighten the clamp by reducing its diameter. By unscrewing the screw from the block 42, the ends of the strap can be separated from each other as shown in Figure 6, thus permitting the object to be removed from the grommet via the open split line.

Although the invention has been described above with reference to one or more preferred embodiments, it will be appreciated that various changes or modifications may be made without departing from the scope of the invention as defined in the appended claims.

## Claims

1. A split grommet assembly comprising:
i. a grommet comprising a body portion with a peripheral edge, a sealing groove round the peripheral edge of the body portion, a gland portion with a peripheral edge, and a hole passing through the body and gland portions, wherein the body and gland portions are each made from an elastomeric material, and wherein the body and gland portions are each split along a split line which runs from the hole to their peripheral edges; and
ii. a clamping ring which encircles the peripheral edge of the gland portion and can be opened to permit an elongate object to be fitted into the hole via the split line, and closed to apply a compressive load to the peripheral edge of the gland portion which resists opening of the body along the split line.

2. The assembly of claim 1 wherein the sealing groove comprises a base and a pair of side walls, and wherein at least one of the side walls is at least partially inclined inwardly towards the other side wall.

3. The assembly of any preceding claim wherein the sealing groove comprises a base and a pair of side walls, and wherein the grommet comprises a first flange which defines a first one of the side walls, and a second flange which defines a second one of the side walls.

4. The assembly of any preceding claim wherein the gland portion comprises a flange running round its peripheral edge, and wherein the clamping ring is positioned between the flange and the sealing groove.

5. The assembly of any preceding claim wherein the clamping ring comprises a strap with first and second ends which can be separated from each other to permit an elongate object to be fitted into the hole via the split line and brought towards each other to close the clamp.

6. The assembly of claim 5 wherein the clamping ring further comprises a clamp tightening mechanism which can be operated to tighten the clamping ring and apply the compressive load to the body.

7. The assembly of any preceding claim wherein the gland portion comprises a flange between the clamping ring and the sealing groove.

8. The assembly of any preceding claim wherein the gland portion and the body portion are integrally formed from a single piece of elastomeric material.

9. A kit of parts for assembling a split grommet assembly according to any preceding claim, the kit of parts comprising:
i. a grommet comprising a body portion with a peripheral edge, a sealing groove round the peripheral edge of the body portion, a gland portion with a peripheral edge, and a hole passing through the body and gland portions, wherein the body and gland portions are each made from an elastomeric material, and wherein the body and gland portions are each split along a split line which runs from the hole to their peripheral edges; and
ii. a clamping ring which can be fitted to encircle the peripheral edge of the gland portion, opened to permit an elongate object to be fitted into the hole via the split line, and closed to apply a compressive load to the peripheral edge of the gland portion which resists opening of the body along the split line.

10. An installation comprising:
i. a grommet assembly comprising a grommet having a body portion with a peripheral edge, a sealing groove round the peripheral edge of the body portion, a gland portion with a peripheral edge, and a hole passing through the body and gland portions, wherein the body and gland portions are each split along a split line which runs from the hole to their peripheral edges; and wherein the grommet assembly further comprises a clamping ring which encircles the peripheral edge of the gland portion;
ii. a wall with an aperture, wherein the wall is seated in the sealing groove of the grommet and the gland portion protrudes from the aperture; and
iii. an elongate object passing through the hole in the grommet, the grommet providing a vapour-proof seal between the object and the wall substantially preventing vapour from passing through the aperture in the wall between the elongate object and the wall,
wherein the clamping ring applies a compressive load to the gland portion which resists opening of the grommet along the split line and causes the gland portion to apply a compressive load to the object, and wherein the clamping ring can be opened to permit the grommet to be opened along the split line and the elongate object removed from the grommet via the open split line.

11. The installation of claim 10 wherein the sealing groove comprises a pair of side walls which each engage the wall.

12. The installation of claim 11 wherein the body portion comprises a first flange which is located between the clamping ring and the wall and defines a first one of the side walls of the sealing groove, and a second flange which defines a second one of the side walls of the sealing groove.

13. A method of assembling the installation of any of claims 10 to 12, the method comprising:
i. passing the elongate object through the aperture;
ii. inserting the elongate object into the hole of the split grommet via the split line;
iii. fitting the body portion of the split grommet into the aperture; and
iv. applying the compressive load to the gland portion with the clamping ring after step ii. so the gland portion applies the compressive load to the object in the hole.

14. The method of claim 13 wherein the body portion is fitted into the aperture by pushing it into the aperture, the body portion deforming as it is pushed into the aperture.

15. The method of claim 14 wherein the sealing groove comprises a base and a pair of side walls, wherein the body portion comprises a first flange which defines a first one of the side walls, and a second flange which defines a second one of the side walls, and wherein the first or second flange is compressed as it is pushed through the aperture on one side and then expands as it exits the aperture on the other side.

16. The method of claim 13, 14 or 15 wherein the compressive load applied by the clamping ring to the gland portion causes the grommet to apply pressure to the wall.

17. The method of claim 15 and 16 wherein the compressive load applied by the clamping ring to the gland portion causes the first or second flange to apply pressure to the wall.

18. The method of any of claims 13 to 17 wherein step iv is performed after the body portion has been fitted into the aperture in step iii.
